Europäisches Patentamt

European Patent Office

Office européen des brevets

(19)

(11) EP 1 126 411 A1

(12) EUROPEAN PATENT APPLICATION

(43) Date of publication:
22.08.2001 Bulletin 2001/34

(51) Int Cl.$^7$: G06T 7/00

(21) Application number: 00301262.2

(22) Date of filing: 17.02.2000

(84) Designated Contracting States:
AT BE CH CY DE DK ES FI FR GB GR IE IT LI LU
MC NL PT SE
Designated Extension States:
AL LT LV MK RO SI

(71) Applicant: BRITISH TELECOMMUNICATIONS
public limited company
London EC1A 7AJ (GB)

(72) Inventor: The designation of the inventor has not
yet been filed

(74) Representative: Lidbetter, Timothy Guy Edwin
BT Group Legal Services,
Intellectual Property Department,
8th Floor, Holborn Centre,
120 Holborn
London EC1N 2TE (GB)

(54) Visual attention location system

(57)     This invention identifies the most significant features in visual scenes, without prior training, by measuring the difficulty in finding similarities between neighbourhoods in the scene. Pixels in an area that is similar to much of the rest of the scene score low measures of visual attention. On the other hand a region that possesses many dissimilarities with other parts of the image will attract a high measure of visual attention.

The invention makes use of a trial and error process to find dissimilarities between parts of the image and does not require prior knowledge of the nature of the anomalies that may be present. The method avoids the use of processing dependencies between pixels and is capable of a straightforward parallel implementation for each pixel.

The invention is of wide application in searching for anomalous patterns in health screening, quality control processes and in analysis of visual ergonomics for assessing the visibility of signs and advertisements.

Figure 1

# EP 1 126 411 A1

**Description**

This invention relates to a system for locating salient objects contained within a static image or a video sequence.

The human visual eye-brain perceptual system is very good at identifying the most important features of a scene with which it is presented, or the identification of objects that are different in some respect from the background or surrounding population, without the prior training required of most automated systems. However, there are some applications where automation is desirable, for example where the work is very repetitive and the volume of data is very large. A particular example is the inspection of medical smear samples in order to identify cancerous cells. In such situations, where a large number of samples have to be inspected and anomalies are rare, a human observer may become inattentive, and overlook the very feature being searched for.

A system that automatically identifies distinctive objects in an image would also be desirable for many other purposes, for example the identification of the location of the principal subject in a visual scene, the design and location of information signs, and as a substitute for lengthy and expensive human factors trials of visual display equipment.

Existing systems for gauging visual attention extract previously specified features (eg colour, intensity, orientation) from images, and then train classifiers (eg neural networks) to identify areas of high attention. These trainable models rely heavily on the selection of the features to be searched for in the image, and have no way of handling new visual material that has little similarity with that used to design and test the system. Paradoxically, a feature may simply be too anomalous to be identified as such by a trained system. Such systems also require considerable computational resource in order to process the pre-selected features and moreover this burden increases without limit as the scope of the procedure is extended and more features are added.

According to the invention, there is provided a method of processing a visual image or a sequence of such images, for locating areas of visual attention, comprising the steps of

storing an image as an array of pixels, each pixel having an intensity value;
selecting test pixels,
for each test pixel, selecting neighbour sequences of pixels neighbouring the test pixel;
selecting comparison pixels having intensity values substantially the same as the test pixel;
identifying the sequence of pixels neighbouring a selected comparison pixel having the same respective positional relationships to the comparison pixel as a selected neighbour sequence of pixels has to the test pixel;
comparing the intensity values of the selected neighbour sequence with the intensity values of the corresponding pixels neighbouring the comparison pixel,
generating a measure of visual attention for each test pixel, being the number of comparisons made for that test pixel before a matching sequence is identified.

In a preferred arrangement, for each comparison pixel, if one or more of the selected pixels neighbouring the test pixel has an intensity value not substantially similar to the corresponding pixel neighbouring the comparison pixel, an anomaly value is incremented, the process is repeated using further comparison pixels with the same test pixel until a comparison pixel is selected for which all the selected pixels have an intensity value substantially similar to the corresponding pixel neighbouring the test pixel, and the final value of the anomaly value for each test pixel is output as the measure of visual attention for that pixel.

It has been found that the process operates most efficiently if neighbour pixel patterns which have previously generated high anomaly values are selected for analysis of subsequent test pixels. Preferably, therefore, the process includes the steps of storing neighbour sequence patterns for which a high anomaly value has been generated, and selecting, for subsequent test pixels, a neighbour sequence having the same respective positional relationships to the subsequent test pixel as the stored neighbour sequence.

According to another aspect of the invention, there is provided apparatus for processing a visual image or a sequence of such images, for locating areas of visual attention, comprising:

means for storing an image as an array of pixels, each pixel having an intensity value;
means for selecting test pixels,
means for selecting neighbour sequences of pixels neighbouring the test pixel;
means for selecting comparison pixels having intensity values substantially the same as the test pixel;
means for identifying the sequence of pixels neighbouring a selected comparison pixel having the same respective positional relationships to the comparison pixel as a selected neighbour sequence of pixels has to the test pixel;
means for comparing the intensity values of the selected neighbour sequence with the intensity values of the corresponding pixels neighbouring the comparison pixel,
means for generating a measure of visual attention for each test pixel, being the number of comparisons made for that test pixel before a matching sequence is identified.

This apparatus is preferably embodied as a general purpose computer, suitably progarmmed.

The invention also extends to a computer programmed to perform the method of the invention, and to a computer program product directly loadable into the internal memory of a digital computer, comprising software code portions for performing the steps specified above.

According to another aspect, the invention provides a computer program product stored on a computer usable medium, comprising:

computer-readable program means for causing a computer to store an image as an array of pixels, each pixel having an intensity value;
computer readable program means for causing the computer to select test pixels,
computer readable program means for causing the computer to select, for each test pixel, neighbour sequences of pixels neighbouring the test pixel;
computer readable program means for causing the computer to select comparison pixels having intensity values substantially the same as the test pixel;
computer readable program means for causing the computer to identify the sequence of pixels neighbouring a selected comparison pixel having the same respective positional relationships to the comparison pixel as a selected neighbour sequence of pixels has to the test pixel;
computer readable program means for causing the computer to compare the intensity values of the selected neighbour sequence with the intensity values of the corresponding pixels neighbouring the comparison pixel,
computer readable program means for causing the computer to generate a measure of visual attention for each test pixel, being the number of comparisons made for that test pixel before a matching sequence is identified.

The invention may be used to identify the principal subject in a visual scene, by identification of the region containing pixels having the greatest anomaly values. It may be used to determine a measure of visual attention afforded to a given object in a visual scene by comparison of the anomaly values generated for the pixels representing that object with the anomaly values generated for other parts of the scene.

The repetitive nature of the process lends itself to parallel processing, and it should be understood that several test pixels may be processed in parallel with each other, and for each test pixel, several sequences of neighbour pixels may also be processed in parallel.

In order to allow for minor variations in intensity between otherwise similar elements of a scene, the comparison of intensity values preferably allows a small difference in intensity values between two pixels to be considered a match, and the term "substantially similar" used above should be understood in that context. The value of this threshold difference may be varied for different cycles, those values which produce a suitable distinction between elements being stored and re-used on subsequent cycles of the process.

For a colour image the intensity values are three-element (red, green, blue) vectors.

This invention identifies saliency in visual scenes by measuring the difficulty in finding similarities between neighbourhoods in the scene. Pixels in an area that is similar to much of the rest of the scene therefore score low measures of visual attention, so are not considered to be worthy of attention. On the other hand a region that possesses many dissimilarities with other parts of the image will attract a high measure of visual attention, as the anomaly values scored will be large.

The invention makes use of a trial and error process to find dissimilarities between parts of the image and does not require prior knowledge of the nature of the anomalies to determine saliency. The method avoids the use of processing dependencies between pixels and is capable of a straightforward parallel implementation for each pixel.

A preferred embodiment will now be described, by way of example, with reference to the figures, in which

Figure 1 illustrates the process schematically;
Figure 2a represents an image to be processed by a method according to the invention, illustrating the comparison process for two sets of pixels $x_j$, $y_j$
Figure 3a represents a second image to be processed by a method according to the invention

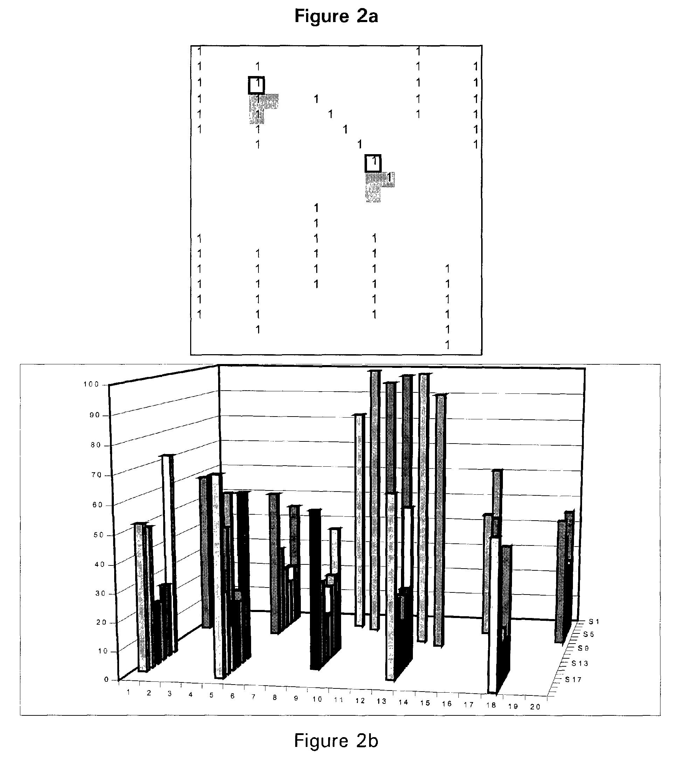

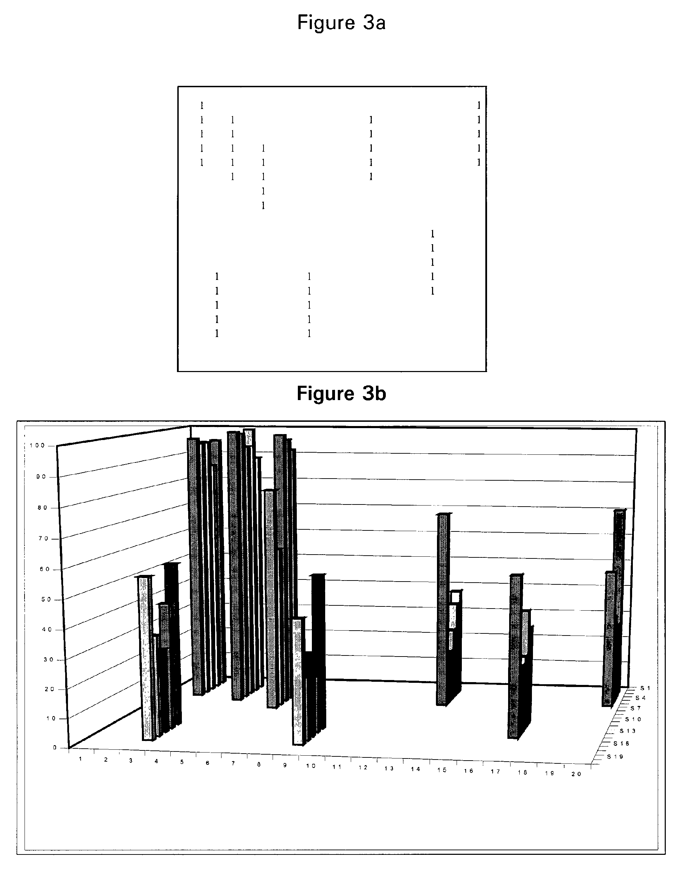

Figures 2b and 3b are mappings of the anomaly values generated for these images.

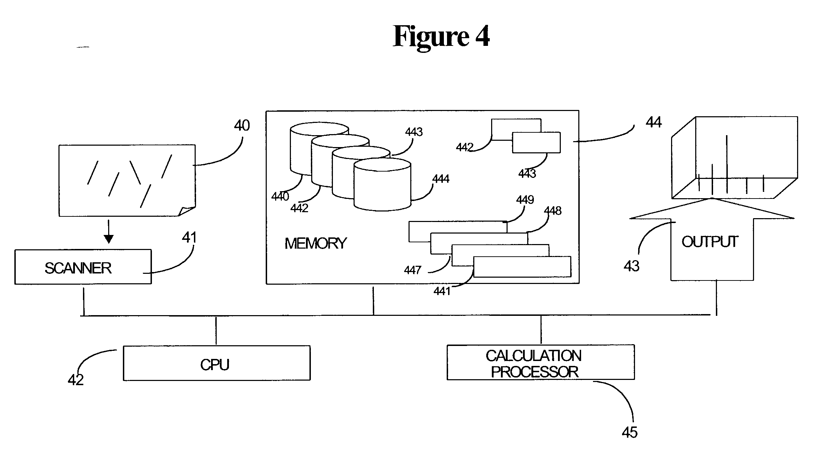

Figure 4 illustrates schematically the basic components of a general purpose computer capable of performing the invention.

The components illustrated in Figure 4 comprise an input means 41, such as a scanner, a central processing unit (CPU) 42, an output unit such as a visual display unit (VDU) or printer 43, a memory 44, and a calculation processor 45. The memory includes stores 440, 444 - 446, registers 441, 447 - 449 and counters 442, 443, The data and the programs for controlling the computer are stored in the memory 44. The CPU 42 controls the functioning of the computer using this information.

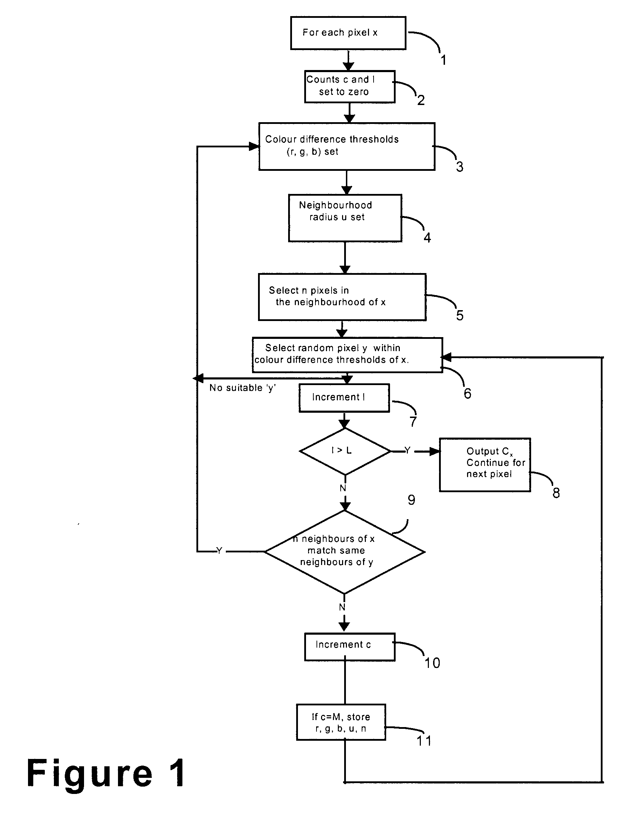

Considering now Figures 1 and 4, the image 40 to be analysed is accessed by the input means 41 and stored in a digital form in an image store 440, as an array A of pixels x where each pixel has colour intensities $(r_x, g_x, b_x)$ attributed to it, in the case of grey level images, a single grey scale intensity value $t_x$.

A pixel x is then selected from the array A (step 1), and its intensity value $(r_x, g_x, b_x)$ or $t_x$ stored in a test pixel register 441. Several test pixels may be processed in parallel, but for purposes of illustration only one will be considered here.

An anomaly count $c_x$, stored in a anomaly counter 442, and a count of the number of pixel comparisons $I_x$ (stored in a comparison counter 443) are both set to zero (step 2).

A search strategy is then selected by the CPU 42 (steps 3, 4, 5) and provided to a neighbour group definition store 444. Each such strategy comprises a set of colour difference thresholds $(\Delta r_x, \Delta g_x, \Delta b_x)$, (or in the case of grey level images a single threshold $\Delta t_i$), (step 3) and a neighbour group definition (steps 4,5). Initially the search strategies will be generated at random by the CPU 42, - if the strategy is not suitable for identifying differences the cycle will be rejected (step 9 below) and a new strategy selected. Successful strategies can be stored in a search strategy store 445 for subsequent re-use (step 11).

The colour difference thresholds selected in step 3 determine whether two pixels are to be considered similar. The difference thresholds must exceed a certain minimum otherwise no similarities will be detected, but if they are too great too many similarities will be found.

To define a neighbour group a radius $u_x$ is selected at random within certain bounds (step 4). This value determines the extent of the neighbourhood of x within which pixel similarity comparisons will be made by the calculation processor 45. The bounds on $u_x$ are determined by the scale of the features that establish visual attention, which will depend on the purpose for which the image is to be analysed. As with the difference thresholds, the selection is random within these limits, selections which fail to provide a distinction being rejected (step 9).

A sequence of n pixels $x_j$ in the neighbourhood of the test pixel x is selected from the image store 440 (step 5). Again, this selection is random, the selection being such that:

$$\text{dist}(x_j, x_{(j-1)}) < u_x$$

where j = 1, ..., n and $x_0 = x$

An example of such a sequence is shown in Figure 2, in which the test pixel (shown boxed) has a sequence (shown shaded) associated with it. Typically n = 3 , and $u_x = 1$. In some cases $u_x$ may vary with j: this allows pixels to be selected from a wide region whilst ensuring that some of the selected pixels are close to the test pixel $x_j$. The value of dist $(x_j, x_{(j-1)})$ may be defined in any suitable units, such as pixel size. The definition of the neighbour sequence is stored in the neighbour group definition store 444.

Previously generated search strategies, comprising neighbour pixel sequences definitions $x_j$ and associated colour difference thresholds $(\Delta r_x, \Delta g_x, \Delta b_x)$ stored in the search strategy store 445 as a result of achieving a high anomaly score on previous test pixels (step 11, to be discussed) may be preferentially selected by the CPU 42, randomly generated candidates only being supplied by the processor 42 to the current neighbour group definition store 444 when the supply of such stored criteria is exhausted. This mechanism reduces the number of unsuccessful iterations of the process and enhances the anomaly values in the vicinity of the object of attention by reusing features that highlight mismatches in the current image.

Similarly, when processing many similar images (for example in a moving image, or any other large set of similar images such as medical smear tests), test sequences that have achieved high anomaly scores on previous tests may be retrieved from the search strategy store 445.

Pixels y are identified as being similar to the test pixel x if:

$$|r_y - r_x| < \Delta r_x, \qquad |g_y - g_x| < \Delta g_x, \qquad \text{and} \qquad |b_y - b_x| < \Delta b_x.$$

For grey level images $|t_y - t_x| < \Delta t_x$.

Such pixels are identified by the calculation processor 45, which compares the intensity values of image pixels stored in the image store 440 with the intensity value of the test pixel stored in the test pixel register 441, using the threshold criteria $\Delta r_x, \Delta g_x,$ and $\Delta b_x$ stored in the current neighbour group definition store 444. The pixels that match, within the limits defined by the threshold criteria, are stored in a comparison pixel store 446, and pixels y are then randomly selected from this store 446 (step 6) to be the current "comparison pixel" (also shown boxed in Figure 2) whose identity is stored in a comparison pixel register 447. If no suitable pixel can be found after a certain number of attempts, then the threshold level is redefined (step 3), and the process restarted from that point.

The value of $I_x$ stored in the comparison counter 443 is incremented (step 7). The contents of the neighbour group definition register 444 are then used by the calculation processor 45 to define a set of pixels forming a test group $x_j$ (register 448) and a set of pixels forming a comparison group $y_j$ (register 449), each pixel $y_j$ of the comparison group having the same positional relationship to the comparison pixel y as the corresponding pixel $x_j$ in the test group has to the test pixel x (step 9). The calculation processor 45 then compares each of the pixels $x_j$ (shaded in Figure 2) with the corresponding pixel $y_j$ (also shown shaded), using the threshold values retrieved from the neighbour group definition store 444. If all the pixels $x_j$ in the test group match with their corresponding pixels $y_j$ in the comparison group, the process is repeated by selecting new comparison criteria (steps 3,4,5) and a new comparison pixel y (step 6). (Note that because the comparison criteria are used to define the pool of available comparison pixels y to be stored in the comparison pixel store 446, this store must be updated with a new set of candidate comparison pixels y).

If (as illustrated in Figure 2) one or more pixels $x_j$ in the test group are not similar to the corresponding pixel $y_j$ in the comparison group, in accordance with the similarity definition above, the count $c_x$ stored in the anomaly count register 442 is incremented (step 10). Another comparison pixel y is retrieved from the comparison pixel store 446 by the conparison pixel register 447 (return to step 6) and the neighbour group definition retrieved from the neighbour group definition store 444 is used to supply a new comparison neighbour group to the comparison group register 449 for comparison with the test group stored in the test group register 448. A set of pixels $x_j$ is retained in the test group register 448 so long as it continues to fail to match other parts of the image. Such a set represents a distinguishing feature of the locality of x — the more failures to match that occur, the more distinctive it is. The more comparison pixels y that the test pixel x fails to provide matches for, the higher the anomaly value $c_x$ stored in the anomaly counter 442 becomes. Conversely, the more matches that the test pixel x generates, the lower the value of the anomaly value when the threshold L is reached by the comparison counter 443.

As the process continues, successful search criteria (that is, combinations of values of $\Delta r_x$, $\Delta g_x$, $\Delta b_x$ and $u_x$, and neighbour sequences, which generate high values of $c_x$,) will become apparent. If a sequence of n pixels $x_j$ and the corresponding colour difference thresholds ($\Delta r_x$, $\Delta g_x$, $\Delta b_x$) cause the anomaly value of $c_x$ stored in the anomlay counter 442 to reach a threshold M before a match is found, the search strategy stored in the neighbour group definition store 444 is copied to the search strategy store 445 (step 11) for future use, if it is not already stored. The criteria that have generated high anomaly values are thus available the search strategy store 445 for use in selecting suitable values in further cycles (steps 3, 4, 5). Once a match is found, the process starts again with a new search strategy (colour difference threshold and neighbour set) stored in the neighbour group definition store 444 (steps 9, 3), either by retrieval from the search strategy store 445 or generated randomly.

When the iteration value $I_x$ stored in the comparison counter 443 reaches a threshold value L, the iterative process stops (step 8) and the current anomaly value $c_x$ stored in the anomaly counter 442 is output at the output unit 43 as the anomaly value for the pixel x. This final anomaly value $c_x$ is the measure of visual attention for the test pixel x, and is the number of attempts (from a total of L attempts) for which the inherent characteristics (i.e the colours) of randomly selected neighbours of pixel x failed to match the corresponding neighbours of pixels y randomly selected from those pixels having the same inherent characteristics as pixel x.

A high value for $I_x$ indicates a high degree of mismatch for pixel x with the rest of the image and consequently that pixel x is part of an object worthy of visual attention.

The output unit 43 is typically a storage medium which stores the anomaly values of each pixel for subsequent processing, or display by means of a printer, visual display unit, etc.

Two simplified examples of the invention in use will now be described. Figure 2a illustrates a monochrome image having several vertical features and a single diagonal feature. It will be seen from Figure 2a that a group of pixels forming a set of neighbours to a pixel from one of the vertical features will match with those neighbouring pixels from other vertical features. However, a pixel forming part of the diagonal feature is unlikely to obtain a match with pixels from the other features. Even pixels elsewhere in the diagonal feature will fail to produce a match if the neighbour pixels of either the test pixel or the comparison pixel extends beyond the end of the feature. Therefore, the probability of obtaining a match for any neighbour set is very much less for a pixel forming part of the diagonal feature, than if it is for one forming part of one of the vertical features.

In the illustrated embodiment the pixels form a regular rectilinear tessellation, but the process is suitable for other arrangements of pixels. If the array is irregular, the positional relationship of each pixel $y_j$ to the comparison pixel y may not be exactly the same the positional relationship of each pixel $x_j$ to the test pixel x, but each one will be the closest possible to the exactly corresponding position.

The process possesses several advantages over other procedures. Firstly the process makes no assumptions about the content of the image and is able to extract useful features relevant to the content as part of the measurement process and hence is able to adapt to the material in any image. Secondly the process applies equally to any configuration of pixels whether arranged in a rectangular array, a spiral array, or an irregular pattern. Thirdly the process may be applied to each pixel x; without any dependency on the computations associated with other pixels and hence may be applied in parallel to many pixels simultaneously. This means that with a parallel implementation results may be obtained from video material in real time, or even faster. Fourthly the algorithm is based upon an evolutionary procedure which has the advantage that trials do not have to be prepared with the rigour normally afforded software processes. Some cycles may not produce useful results, for example because they contain obvious redundancy (eg a sequence of neighbour pixels $x_j$ which includes the same pixel more than once). Such cycles are rejected in the same way as any other cycle that fails to identify distinguishing features, without any special rejection process being necessary to identify such sequences. This effectively removes the computational burden required to accurately construct viable candidates for trial.

In the following simplified examples, the process has been applied to black and white images consisting entirely of ones and zeros. In this case $\Delta t_i = \frac{1}{2}$, n = 3, L = 100, and $u_i = 1$. The first example (Figure 2a, Figure 2b) exemplifies the classical problem of "popout" in which certain types of shape stand out if they are surrounded by different shapes.

The measures of visual attention attributed to each pixel in Figure 2a are shown in the chart in Figure 2b. The vertical scale indicates the anomaly value (expressed as a percentage of the number of attempts L) for each pixel. It can be seen that the anomaly values $c_i$ are very much higher for the diagonal bar than for the vertical bars.

Figure 3a illustrates the effect of clustering on visual attention where a grouping of vertical lines is placed amongst others that are more widely separated. The results of using the process of this invention are shown in Figure 3b. Again, the clustered lines produce a higher anomaly score.

It will be noted that the process does not require any previous knowledge of the nature of the anomalies being searched for. The anomaly may be in orientation (as in Figure 2a), spacing (as in Figure 3a), shape, length, colour or any other characteristic.

The invention is of wide application in a number of fields. Firstly, identification of the principal subject in a visual scene is the first essential stage in the categorisation of unfiltered visual content - it is also the most difficult. Once this step has been achieved, it may be followed by manual tagging, or a range of template matching or other automatic techniques for recognition of the features so identified.

The ergonomic considerations in the design and location of warning signs (eg road signs) in order to render them conspicuous is often a process of trial and error, with risk to the public during this phase. An objective measure of visual attention (in other words, identifying whether the sign, or something else, is the principal subject in the intended audience's view of the sign in its proposed environment) would improve the design process and reduce the risk of accidents caused by insufficiently conspicuous experimental signs. The visual impact of other signs, such as advertisements, and the layout of display screens such as Internet "Websites", can also be optimised using this process to maximise visual attention in specific locations.

Secondly, the invention would be capable of identifying objects that are different in some respect from the background or surrounding population. For example, a cancerous cell may be identified by its possession of features not present in the surrounding healthy cells. The identification of such anomalies by eye is currently a very labour-intensive process, because of the large number of samples to be inspected and the comparative rarity of cancerous cells. Human observers have been known to fail to notice anomalous cells as a result of eye strain and fatigue.

As another example, in bubble chamber photographs used by particle physicists, new and anomalous patterns of particle tracks may be identified by this process. Since the tracks of most interest are those generated by hitherto undiscovered particles with unknown properties, it is not possible to devise a template to search for them.

As a further example, the objective detection of defects in visual representations of textures would improve quality assurance of manufacturing processes of fabrics, microchip layouts and other processes where surface defects are to be avoided.

Thirdly, recognition of the presence of objects that do not match their surroundings has many applications in the field of security surveillance. Such objects may constitute a serious hazard if not brought to the early attention of security personnel. Similarly, anomalous objects present in satellite images may reveal valuable intelligence information or local changes in the ecology.

Finally, the invention may serve as a model of human visual perception with application to a range of tasks in which it is required to emulate human performance as a substitute for lengthy and expensive human factors trials.

## Claims

1. A method of processing a visual image or a sequence of such images, for locating areas of visual attention, comprising the steps of:

    storing an image as an array of pixels, each pixel having an intensity value;
    selecting test pixels,

for each test pixel, selecting one or more neighbour sequences of pixels neighbouring the test pixel;
selecting comparison pixels having intensity values substantially the same as the test pixel;
identifying the sequence of pixels neighbouring a selected comparison pixel having the same respective positional relationships to the comparison pixel as a selected neighbour sequence of pixels has to the test pixel;
comparing the intensity values of the selected neighbour sequence with the intensity values of the corresponding pixels neighbouring the comparison pixel,
generating a measure of visual attention for each test pixel, being the number of comparisons made for that test pixel before a matching sequence is identified.

2. A method according to claim 1 wherein, for each comparison pixel, if one or more of the selected pixels neighbouring the test pixel has an intensity value not substantially similar to the corresponding pixel neighbouring the comparison pixel, an anomaly value is incremented, and the process is repeated using further comparison pixels with the same test pixel until a comparison pixel is selected for which all the selected pixels have an intensity value substantially similar to the corresponding pixel neighbouring the test pixel, and the final value of the anomaly value for each test pixel is output as the measure of visual attention for that pixel.

3. A method according to claim 1 or 2, wherein a plurality of test pixels are analysed concurrently.

4. A method according to claim 1, 2 or3 wherein a plurality of comparison pixels are compared with a given test pixel concurrently.

5. A method according to claim 1, 2, 3 or 4, wherein the intensity value is a three-element vector representative of a colour image

6. A method according to claim 1, 2, 3, 4 or 5 wherein in addition to neighbour sequences, further variable search criteria are selected.

7. A method according to claim 6, wherein the further variable search criteria include a threshold value for the determination of whether two pixel intensity values are substantially similar.

8. .A method according to claim 1, 2, 3, 4, 5, 6 or 7, the method including the step of storing values for search criteria for which a high anomaly value has been generated, and selecting, for subsequent test pixels, the same search criteria.

9. A method according to claim 1, 2, 3, 4, 5, 6, 7 or 8, wherein the principal subject in a visual scene is identified by identification of the region containing pixels having the greatest anomaly values

10. A method according to claim 1, 2, 3, 4, 5, 6, 7 or 8, wherein a measure of visual attention afforded to a given object in a visual scene is determined by comparison of the anomaly values generated for the pixels representing that object with the anomaly values generated for other parts of the scene.

11. Apparatus for processing a visual image or a sequence of such images, for locating areas of visual attention, comprising

means for storing an image as an array of pixels, each pixel having an intensity value;
means for selecting test pixels,
means for selecting neighbour sequences of pixels neighbouring the test pixel;
means for selecting comparison pixels having intensity values substantially the same as the test pixel;
means for identifying the sequence of pixels neighbouring a selected comparison pixel having the same respective positional relationships to the comparison pixel as a selected neighbour sequence of pixels has to the test pixel;
means for comparing the intensity values of the selected neighbour sequence with the intensity values of the corresponding pixels neighbouring the comparison pixel,
means for generating a measure of visual attention for each test pixel, being the number of comparisons made for that test pixel before a matching sequence is identified.

12. A computer programmed to perform the method of any of claims 1 to 10.

**13.** A computer program product directly loadable into the internal memory of a digital computer, comprising software code portions for performing the steps of any of claims 1 to 10 when said product is run on a computer.

**14.** A computer program product stored on a computer usable medium, comprising:

computer-readable program means for causing a computer to store an image as an array of pixels, each pixel having an intensity value;

computer readable program means for causing the computer to select test pixels,

computer readable program means for causing the computer to select, for each test pixel, neighbour sequences of pixels neighbouring the test pixel;

computer readable program means for causing the computer to select comparison pixels having intensity values substantially the same as the test pixel;

computer readable program means for causing the computer to identify the sequence of pixels neighbouring a selected comparison pixel having the same respective positional relationships to the comparison pixel as a selected neighbour sequence of pixels has to the test pixel;

computer readable program means for causing the computer to compare the intensity values of the selected neighbour sequence with the intensity values of the corresponding pixels neighbouring the comparison pixel,

computer readable program means for causing the computer to generate a measure of visual attention for each test pixel, being the number of comparisons made for that test pixel before a matching sequence is identified.

Figure 1

## Figure 2a

Figure 2b

# Figure 3a

# Figure 3b

EP 1 126 411 A1

# Figure 4

40

41

SCANNER

42

CPU

MEMORY

440 442

443

444

449 448

447

441

442

443

44

43

OUTPUT

CALCULATION
PROCESSOR

45

## European Patent Office

**EUROPEAN SEARCH REPORT**

Application Number

EP 00 30 1262

### DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| A | WO 99 05639 A (ARCH DEVELOPMENT CORPORATION) 4 February 1999 (1999-02-04) * claims 1-4 * | 1,11,14 | G06T7/00 |
| A | US 5 113 454 A (JEFFREY J. MARCANTONIO ET AL.) 12 May 1992 (1992-05-12) * claim 1 * | 1,11,14 | |
| A | GUOYOU WANG ET AL: "EFFICIENT METHOD FOR MULTISCALE SMALL TARGET DETECTION FROM A NATURAL SCENE" OPTICAL ENGINEERING,US,SOC. OF PHOTO-OPTICAL INSTRUMENTATION ENGINEERS. BELLINGHAM, vol. 35, no. 3, 1 March 1996 (1996-03-01), pages 761-768, XP000597465 ISSN: 0091-3286 * abstract * | 1,11,14 | |

TECHNICAL FIELDS SEARCHED (Int.Cl.7)

G06T
G06F

The present search report has been drawn up for all claims

| Place of search | Date of completion of the search | Examiner |
|---|---|---|
| THE HAGUE | 15 August 2000 | Chateau, J-P |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**ANNEX TO THE EUROPEAN SEARCH REPORT
ON EUROPEAN PATENT APPLICATION NO.**

EP 00 30 1262

This annex lists the patent family members relating to the patent documents cited in the above-mentioned European search report.
The members are as contained in the European Patent Office EDP file on
The European Patent Office is in no way liable for these particulars which are merely given for the purpose of information.

15-08-2000

| Patent document cited in search report | | Publication date | Patent family member(s) | | Publication date |
|---|---|---|---|---|---|
| WO 9905639 | A | 04-02-1999 | US | 6078680 A | 20-06-2000 |
| | | | AU | 8509998 A | 16-02-1999 |
| US 5113454 | A | 12-05-1992 | NONE | | |

EPO FORM P0459

For more details about this annex : see Official Journal of the European Patent Office, No. 12/82